# EUROPÄISCHE PATENTANMELDUNG

(11) **EP 1 470 985 A2**
(43) Veröffentlichungstag der Anmeldung: **27.10.2004**
(21) Anmeldenummer: 04005167.4
(22) Anmeldetag: 04.03.2004
(51) Int. Cl.: B62B 3/06, B62B 5/06

(54) **Flurförderzeug**

(30) Priorität: 26.03.2003 DE 10313449
(71) Anmelder: STILL S.A.R.L., 77107 Meaux Cedex (FR)
(72) Erfinder: Boulant, Yann, 60300 Senlis (FR); Brouart, Francois, 60280 Margny les compiegne (FR)
(74) Vertreter: Lang, Michael

(57) **Zusammenfassung**

Die Erfindung betrifft ein deichselgeführtes Flurförderzeug (1) mit einem Antriebsteil (2), einem Lastteil (3) und einem deichselartigen Steuerelement (4). Erfindungsgemäß ist mindestens ein Griffbereich (22) des Steuerelements (4) beheizbar, so dass auch beim Einsatz in kälteexponierten Bereichen eine feinfühlige und sichere Bedienung ermöglicht wird.

## Beschreibung

Die Erfindung betrifft ein deichselgeführtes Flurförderzeug mit einem Antriebsteil, einem Lastteil und einem deichselartigen Steuerelement. Derartige Flurförderzeuge werden zum innerbetrieblichen Warentransport häufig auch in kälteexponierten Bereichen, wie beispielsweise in Kühlhäusern oder im Freien, eingesetzt. Die Bedienung der wesentlichen Funktionen des Geräts erfolgt dabei über am deichselartigen Steuerelement angebrachte Bedienelemente, mit denen beispielsweise die Hubfunktionen und der Fahrantrieb des Flurförderzeugs gesteuert werden.

Das Bedienpersonal für diese Geräte trägt beim Dauereinsatz in kälteexponierten Bereichen zumeist Schutzkleidung, insbesondere Handschuhe. Dadurch wird jedoch die Bedienung erschwert, vor allem bei kleinen Bedienelementen, wie sie am Kopfteil des deichselartigen Steuerelements aufgrund des beschränkten Platzangebots häufig verwendet werden müssen. Insbesondere die feinfühlige Bedienung von Funktionen, die über Proportionalbedienelemente präzise angesteuert werden sollen, ist aufgrund der Polsterung der Handschuhe oft nicht möglich. Bei einem nur gelegentlichen Einsatz des Flurförderzeugs in kalten Bereichen trägt das Bedienpersonal oftmals keinen geeigneten Kälteschutz, so dass auch hierbei, besonders wenn das Flurförderzeug zuvor in dem kalten Bereich abgestellt war und vollständig abgekühlt ist, aufgrund der Abkühlung der Hände die feinfühlige Bedienung erheblich erschwert wird. Dies mindert die Beförderungsleistung und kann, insbesondere bei der Steuerung des Fahrantriebs, zu einer erheblichen Sicherheitsgefahr werden.

Der Erfindung liegt daher die Aufgabe zugrunde, ein deichselgeführtes Flurförderzeug mit einem Antriebsteil, einem Lastteil und einem deichselartigen Steuerelement zu schaffen, das auch beim Einsatz in kälteexponierten Bereichen eine feinfühlige und sichere Bedienung ermöglicht.

Diese Aufgabe wird erfindungsgemäß dadurch gelöst, dass mindestens ein Griffbereich des Steuerelements beheizbar ist. Die von der Bedienperson umfassten Bereiche werden dadurch auf einer angenehmen Temperatur gehalten, die das Auskühlen der Hände auch bei niedrigen Umgebungstemperaturen verhindert oder verzögert. Dadurch kann die Bedienperson auf Handschuhe verzichten und es ist eine feinfühlige Bedienung gewährleistet.

Besonders vorteilhaft ist es, wenn zur Wärmeerzeugung mindestens ein elektrisches Widerstandselement verwendet wird. Da deichselgeführte Flurförderzeuge zumeist elektrisch betrieben werden, ist eine elektrische Energieversorgung, beispielsweise durch eine mitgeführte Batterie, bereits vorhanden und es wird ein einfacher Aufbau erreicht. Elektrische Widerstände sind in ihrer Wärmeabgabe zudem gut regulierbar.

Besonders vorteilhaft ist es, wenn zur Wärmeerzeugung Abwärme von Komponenten des Flurförderzeugs verwendet wird. Da die Abwärme beim Betrieb des Flurförderzeugs ohne zusätzlichen Energieaufwand anfällt, kann auf separate Heizelemente für die Beheizung der Griffbereiche verzichtet oder es können Heizelemente mit kleinerer Heizleistung verwendet werden, wodurch ein einfacherer Aufbau und ein energieeffizienterer Betrieb erreicht wird.

Es ist von Vorteil, wenn die Beheizung des mindestens einen Griffbereichs durch einen Fluidstrom vorgenommen wird. Dadurch muss die Wärmequelle nicht in unmittelbarer Umgebung der Griffbereiche untergebracht werden und es kann beispielsweise die Abwärme von Komponenten, die sich im Antriebsteil des Flurförderzeugs befinden, verwendet werden.

Es ist weiterhin von Vorteil, wenn als Fluid zur Beheizung des mindestens einen Griffbereichs Luft verwendet wird. Diese ist frei verfügbar, kann ohne Aufwand durch das Flurförderzeug geleitet werden und erfordert keine abgedichteten Kreislaufsysteme.

Es ist von besonderem Vorteil, wenn erwärmte Luft durch Öffnungen im Steuerelement austritt. Dadurch ist es möglich, einen gezielten Warmluftstrom auf die zu erwärmenden Bereiche zu richten. Insbesondere können so nicht nur die direkt auf den Griffflächen aufliegenden Handflächen der Bedienperson erwärmt werden, sondern beispielsweise auch der Handrücken oder einzelne, an Bedienelementen tätige Finger.

In einer zweckmäßigen Ausbildung der Erfindung wird als Fluid zur Beheizung des mindestens einen Griffbereichs Hydraulikflüssigkeit verwendet. Hydraulikflüsigkeit wird bei gattungsgemäßen Flurförderzeugen häufig für einen Hubantrieb verwendet und erwärmt sich im Betrieb ohne zusätzlichen Energieaufwand. Dadurch kann auf separate Heizelemente für die Beheizung der Griffbereiche verzichtet oder es können Heizelemente mit kleinerer Heizleistung verwendet werden, wodurch ein einfacherer Aufbau und ein energieeffizienterer Betrieb erreicht wird.

Es ist von Vorteil, wenn das mindestens eine elektrische Widerstandselement zur Beheizung des mindestens einen Griffbereichs im Griffbereich des Steuerelements angeordnet ist. Dadurch wird eine verlustarme Zuführung der Wärme zum Griffbereich ermöglicht.

Es ist besonders vorteilhaft, wenn die zur Beheizung des mindestens einen Griffbereichs verwendete Heizleistung regulierbar ist. Dadurch kann die Beheizung des Griffbereichs an die Bedürfnisse der Bedienperson angepasst werden.

Es ist von besonderem Vorteil, wenn der mindestens eine Griffbereich in Abhängigkeit von der Umgebungstemperatur beheizbar ist. Dadurch wird eine optimale Versorgung mit Wärme bei geringem Energieverbrauch gewährleistet

Weiterhin ist es vorteilhaft, wenn die Beheizung des mindestens einen Griffbereichs bei Nichtbenutzung des Flurförderzeugs automatisch abschaltbar ist. Dadurch wird der Energieverbrauch des Flurförderzeugs bei Nichtgebrauch reduziert.

Weitere Vorteile und Einzelheiten der Erfindung werden anhand des in den schematischen Figuren dargestellten Ausführungsbeispiels näher erläutert. Dabei zeigt
- Figur 1: einen erfindungsgemäßen Mitgängergabelhubwagen,
- Figur 2: einen erfindungsgemäßen Deichselkopfbereich eines deichselartigen Steuerelements.

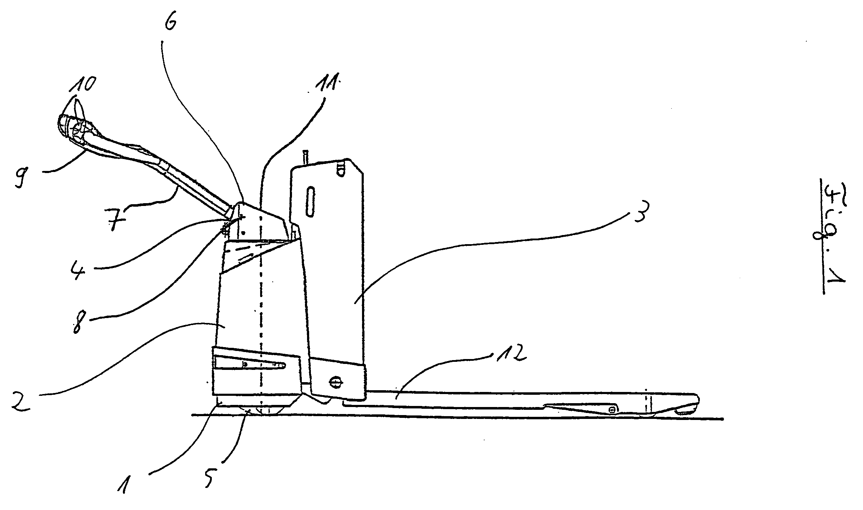

In Figur 1 ist ein erfindungsgemäßer Mitgängergabelhubwagen 1 mit einem Antriebsteil 2, einem Lastteil 3 und einem deichselartigen Steuerelement 4 gezeigt. Im Antriebsteil 2 sind unter anderem ein Fahr- und ein Hubantrieb sowie deren elektronische Steuerungskomponenten untergebracht, die hier nicht dargestellt sind. Der Fahrantneb treibt ein Antriebsrad 5 an, das durch das deichselartige Steuerelement 4 gelenkt wird. Das deichselartige Steuerelement 4 besitzt einen Gelenkteil 6, an dem eine Deichsel 7 um eine horizontale Achse 8 beweglich gelagert ist. Am bedienerseitigen Ende der Deichsel 7 ist ein Deichselkopf 9 angebracht. Am Deichselkopf 9 sind die Bedienelemente 10 zur Steuerung der Funktionen des Flurförderzeugs 1 angeordnet. Zur Lenkung des Flurförderzeugs 1 erfasst die Bedienperson den Deichselkopf 9 des deichselartigen Steuerelements 4 und kann durch eine Drehung des deichselartigen Steuerelements 4 um die im Gelenkteil 6 angebrachte senkrechte Achse 11 die Fahrtrichtung vorgeben. Eine Last wird auf dem Lastaufnahmemittel 12 aufgenommen und angehoben. Als Hubantrieb wird dafür zumeist ein hier nicht dargestelltes hydraulisches System verwendet, bei dem ein Hubzylinder von einer von einem Elektromotor angetriebenen Hydraulikpumpe mit Hydraulikflüssigkeit versorgt wird.

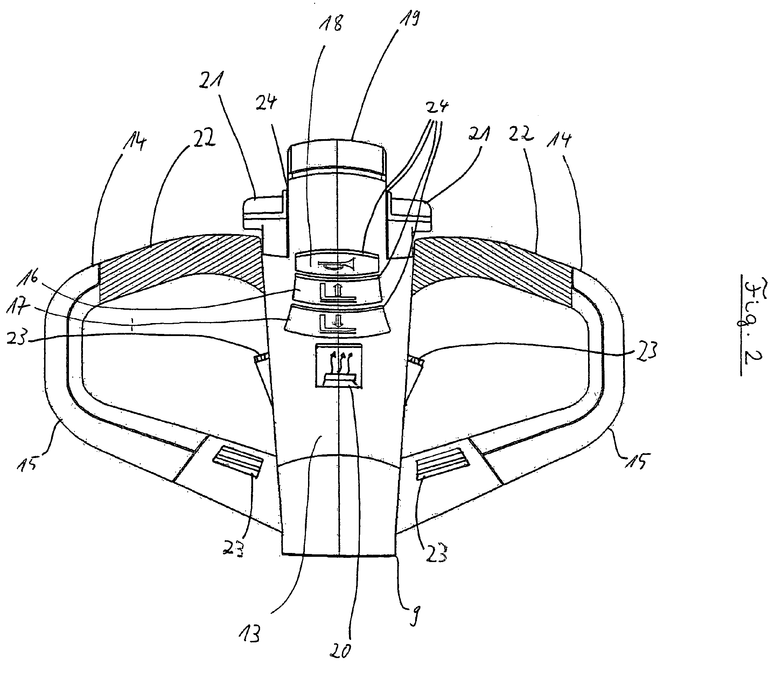

Figur 2 zeigt einen Deichselkopf 9 eines erfindungsgemäßen deichselförmigen Steuerelements 4. Bedienelemente zur Steuerung des Hubwagens 1 sind im zentralen Teil 15 des Deichselkopfes 9 angeordnet, während sich rechts und links des Mittelteils 13 zwei Griffelemente 14 befinden, an denen die Bedienperson den Deichselkopf 9 und damit das Flurförderzeug 1 führt und lenkt. Die Außenbereiche der Griffelemente 14 sind mit Bügeln 15 mit dem Mittelteil 13 verbunden.

Die Hubhöhe des Lastaufnahmemittels 3 wird über zwei Drucktaster 16, 17 gesteuert, von denen ein Drucktaster 16 das Heben des Lastaufnahmemittels und ein Drucktaster 17 das Senken des Lastaufnahmemittels 3 bewirkt. Diese Drucktaster 16, 17 können beispielsweise auch als Stufen- oder Proportionalschaltelement ausgeführt werden, um Hubhöhe oder Hubgeschwindigkeit in Abhängigkeit von der Stärke des Tastendrucks zu steuern. Die Bedienung solcher Stufen- oder Proportionaltaster ist mit Handschuhen erheblich erschwert, da die Bedienperson mit diesen nicht das nötige Gefühl für die Betätigungskraft besitzt.

Zusätzlich ist ein Drucktaster 18 zu Betätigung einer Hupe und ein Sicherheitschalter 19 angebracht. Der Sicherheitsschalter 19 soll das Einklemmen einer Bedienperson zwischen dem Deichselkopf 9 und einem Hindernis verhindern, indem das Flurförderzeug 1 nach Betätigung des Schalters 19 gestoppt wird und sich kurz in Gegennchtung bewegt. Die erfindungsgemäße Heizvorrichtung wird über den Drucktaster 20 aktiviert. Andere Ausfuhrungsformen sind aber ebenso denkbar, beispielsweise mittels eines mehrstufigen Druckschalters oder eines Dreh- oder Schiebeschalters, welche auch eine Einstellung der Heizleistung ermöglichen.

Die Fahrgeschwindigkeit des Hubwagens 1 wird über zwei flügelartige Drehschalter 21 eingestellt, wofür ebenfalls Proportionalschaltelemente verwendet werden können. Auch bei diesen Schaltern 21 besteht das Problem, dass mit Handschuhen oder mit kalten Fingern eine exakte Bedienung nicht gewährleistet werden kann.

Bei dem erfindungsgemäßen deichselförmigen Steuerelement 4 werden die schraffiert dargestellten Bereiche 22 der Griffelemente 14 mittels in diesen Griffelementen 14 angebrachten elektrischen Widerstandselementen beheizt. Zusätzlich werden durch einen Warmluftstrom, der vom Antriebsteil 2 durch die Deichsel 8 in den Deichselkopf 9 geleitet wird, die Griffelemente 14 von der Innenseite her beheizt. Selbstverständlich können diese beiden Methoden jeweils auch als alleiniges Heizungssystem verwendet werden. Durch die Zuführung von Warmluft in den Deichselkopf 9 wird auch die Bildung von Kondenswasser beim Übergang von warmen in kalte Arbeitsumgebungen verhindert, so dass eine Schädigung von im Deichselkopf 9 befindlichen Komponenten durch Feuchtigkeit vermieden wird.

Die in den Deichselkopf 9 geleitete Warmluft tritt über Lüftungsöffnungen 23, 24 aus. Bei einer strukturierten Oberfläche der Griffbereiche 22 können Lüftungsöffnungen beispielsweise auch in den Vertiefungen der Oberflächenstruktur sitzen und so die Luft direkt entlang der Handinnenflächen ausströmen. Lüftungsöffnungen 23 im Mittelteil 13 des Deichselkopfs 9 oder in den Bügeln 15 ermöglichen es, warme Luft auf den Handrücken und die Fingeraußenseiten der Bedienperson zu leiten. Auch an den Einbauöffnungen 24 der Bedienelemte tritt der Luftstrom zwischen Bedienelement 10 und Deichselkopfgehäuse 10 aus. Dadurch sind weniger speziell dafür vorgesehene Öffnungen erforderlich. Dieses System kann auch als alleinige Ausführungsform verwendet werden und eignet sich besonders für eine Nachrüstung bei vorhandenen Hubwagen. Vorteilhaft ist es, die Wärmezufuhr mit bereits in Flurförderzeugen 1 nach dem Stand der Technik vorhandenen Wärmequellen vorzunehmen. Dazu wird beispielsweise ein Luftstrom durch ein Gebläse an diesen Quellen vorbeigeführt und dann in das deichselförmige Steuerelement 4 geleitet So wird die Abwärme elektrischer Steuerungen, Antriebe oder sonstiger Komponten oder die beim Betrieb von Hydraulikanlagen frei werdende Warme verwendet. Eine Regelung der Heizleistung ist dabei durch die Regelung der geförderten Luftmenge oder durch die Beimischung von Kaltluft möglich. Zur Aufheizung der Luft können in weiteren Ausgestaltungsformen auch speziell dafür vorgesehene, dann vorzugsweise direkt regulierbare Wärmequellen verwendet werden. Außer elektrischen Widerstandselementen sind beispielsweise auch auf Verbrennung oder chemischen Verfahren beruhende Quellen denkbar.

In einer weiteren Ausgestaltungsform wird die Abwärme von hydraulischen Anlagen zur Beheizung des Griffbereichs 22 genutzt, indem die erwärmte Hydraulikflüssigkeit in den Deichselkopf 9 zum Griffbereich 22 geleitet wird. Aufgrund der großen Wärmekapazität der Hydraulikflüssigkeit kann dabei auch bei einem Stillstand der Hydraulikanlage noch eine gewisse Zeit eine Wärmewirkung erzielt werden.

Ein Temperatursensor, der an einer möglichst vom Betriebszustand, insbesondere der Abwärme der Komponenten, des Flurförderzeugs unbeinflussten Stelle angebracht ist, erfasst die Umgebungstemperatur. Bei Unterschreiten eines festgelegten Wertes wird die Heizung der Grifflächen 22 aktiviert, bei Überschreiten eines weiteren festgelegten Wertes wird die Heizung der Grifflächen 22 deaktiviert. Dadurch wird der Energieverbrauch der Heizvorrichtung reduziert, da diese nur betrieben wird, wenn sie auch benötigt wird. Bei einem häufigen Wechsel des Flurförderzeugs 1 von kalten in warme Umgebungen besteht ansonsten die Gefahr, dass eine Bedienperson beim Aufenthalt im warmen Bereich die Heizvorrichtung nicht deaktiviert, wodurch unnötig Energie verbraucht wird. Die Steuerung der Heizleistung wird sinnvollerweise in Abhängigkeit von der Umgebungstemperatur vorgenommen, so dass bei besonders tiefen Temperaturen eine besonders große Heizleistung zur Verfügung gestellt wird, während bei weniger tiefen Temperaturen nur wenig Heizleistung eingebracht wird. Es ist ebenfalls denkbar, bei stark abnehmender Batteriekapazität die Heizleistung zu reduzieren, um noch genügend Energie beispielsweise für eine Rückkehr des Flurförderzeugs 1 zu einer Ladestation zur Verfügung zu haben.

Wird das Flurförderzeug 1 längere Zeit nicht benutzt, wird die Heizvorrichtung ebenfalls deaktiviert, wodurch Energie eingespart wird. Zur Erkennung der Benutzung bzw. Nichtbenutzung sind die dafür nach dem Stand der Technik gebräuchlichen Methoden verwendbar, beispielsweise, indem die Betätigung von Bedienelementen erkannt wird. Auch die Verwendung von Drucksensoren in den Griffbereichen 22 ist denkbar Bei Verwendung von Hautwiderstandssensoren in den Griffbereichen 22 kann sogar unterschieden werden, ob die Bedienperson Handschuhe trägt und so in diesem Fall die Heizung deaktiviert bleiben.

## Patentansprüche

1. Deichselgeführtes Flurförderzeug mit einem Antriebsteil (2), einem Lastteil (3) und einem deichselartigen Steuerelement (4), **dadurch gekennzeichnet, dass** mindestens ein Griffbereich (22) des Steuerelements (4) beheizbar ist.

2. Deichselgeführtes Flurförderzeug nach Anspruch 1, **dadurch gekennzeichnet, dass** zur Wärmeerzeugung mindestens ein elektrisches Widerstandselement verwendet wird.

3. Deichselgeführtes Flurförderzeug nach Anspruch 1 oder 2, **dadurch gekennzeichnet, dass** zur Wärmeerzeugung Abwärme von Komponenten des Flurförderzeugs (1) verwendet wird.

4. Deichselgeführtes Flurförderzeug nach einem der Ansprüche 1 bis 3, **dadurch gekennzeichnet, dass** die Beheizung des mindestens einen Griffbereichs (22) durch einen Fluidstrom vorgenommen wird.

5. Deichselgeführtes Flurförderzeug nach einem der Ansprüche 1 bis 4, **dadurch gekennzeichnet, dass** als Fluid zur Beheizung des mindestens einen Griffbereichs (22) Luft verwendet wird.

6. Deichselgeführtes Flurförderzeug nach einem der Ansprüche 1 bis 5, **dadurch gekennzeichnet, dass** erwärmte Luft durch Öffnungen (23,24) im Steuerelement (4) austritt.

7. Deichselgeführtes Flurförderzeug nach einem der Ansprüche 1 bis 6, **dadurch gekennzeichnet, dass** als Fluid zur Beheizung des mindestens einen Griffbereichs (22) Hydraulikflüssigkeit verwendet wird.

8. Deichselgeführtes Flurförderzeug nach einem der Ansprüche 1 bis 7, **dadurch gekennzeichnet, dass** das mindestens eine elektrische Widerstandselement zur Beheizung des mindestens einen Griffbereichs (22) im Griffbereich (22) des Steuerelements (4) angeordnet ist.

9. Deichselgeführtes Flurförderzeug nach einem der Ansprüche 1 bis 8, **dadurch gekennzeichnet, dass** die zur Beheizung des mindestens einen Griffbereichs (22) verwendete Heizleistung regulierbar ist.

10. Deichselgeführtes Flurförderzeug nach einem der Ansprüche 1 bis 9, **dadurch gekennzeichnet, dass** die zur Beheizung des mindestens einen Griffbereichs (22) verwendete Heizleistung in Abhängigkeit von der Umgebungstemperatur regulierbar ist.

11. Deichselgeführtes Flurförderzeug nach einem der Ansprüche 1 bis 10, **dadurch gekennzeichnet, dass** die Beheizung des mindestens einen Griffbereichs (22) bei Nichtbenutzung des Flurförderzeugs (1) automatisch abschaltbar ist.
